# EUROPÄISCHE PATENTSCHRIFT

(11) **EP 1 508 465 B1**
(45) Veröffentlichungstag und Bekanntmachung des Hinweises auf die Patenterteilung: **09.04.2008**
(21) Anmeldenummer: 04013228.4
(22) Anmeldetag: 04.06.2004
(51) Int. Cl.: B60K 15/05, E05F 5/06, E05D 5/06

(54) **Tankklappenanordnung für ein Kraftfahrzeug sowie Verfahren zu ihrer Herstellung**
Fuel door arrangement for a motor vehicle and method for its production
Agencement de volet d'occultation du bouchon de remplissage de véhicule automobile et son procédé de fabrication

(30) Priorität: 21.08.2003 DE 10338820
(43) Veröffentlichungstag der Anmeldung: 23.02.2005
(73) Patentinhaber: Volkswagen Aktiengesellschaft, 38436 Wolfsburg (DE)
(72) Erfinder: Winkler, Bernd, 30938 Grossburgwedel (DE); Hacker, Roland, 38552 Isenbüttel (DE)
(74) Vertreter: Basfeld, Rainer

(56) Entgegenhaltungen:
- EP-A- 0 760 306
- DE-A- 1 430 263
- DE-A- 4 125 184
- DE-A- 19 827 194

## Beschreibung

Die vorliegende Erfindung betrifft eine Tankklappenanordnung für ein Kraftfahrzeug, umfassend eine Tankmulde, eine Tankklappe, die aus einer ersten Position, in der die Tankklappe die Tankmulde zumindest abschnittsweise verschließt, in mindestens eine zweite Position verschwenkt werden kann, in der die Tankmulde für das Betanken des Kraftfahrzeugs von außen zugänglich ist, sowie Dämpfungsmittel für die Dämpfung der Schwenkbewegung der Tankklappe. Weiterhin betrifft die vorliegende Erfindung ein Verfahren zur Herstellung einer derartigen Tankklappenanordnung.

Eine Tankklappenanordnung sowie ein Verfahren der vorgenannten Art sind aus der deutschen Offenlegungsschrift DE 101 37 035 A1 bekannt. Die darin beschriebene Tankklappenanordnung umfasst eine Tankklappe, die um eine Schwenkachse herum von der Tankmulde weggeschwenkt werden kann. Auf der Schwenkachse ist ein Zahnradelement angeordnet, das mit einem drehgedämpften Ritzel kämmt. Insbesondere ist das Ritzel gegen die Federkraft einer Spiralfeder drehbar. Die Schwenkbewegung der Tankklappe wird somit durch die Federkraft dieser Spiralfeder zumindest gegen Ende der Öffnungsbewegung gedämpft.

Als nachteilig bei einer derartigen Tankklappenanordnung erweist sich die Tatsache, dass zum Einen für die Dämpfung der Schwenkbewegung ein vergleichsweise hoher apparativer Aufbau betrieben wird, weil zusätzliche Teile wie Zahnräder und Federn in die Tankklappenanordnung integriert werden müssen. Zum Anderen wird durch eine derartige Dämpfung der Schwenkbewegung nicht verhindert, dass die Tankklappe in ihrer Endstellung vergleichsweise hart gegen eventuell vorhandene Anschläge schlägt oder aber für den Fall, dass keine Anschläge vorhanden sind, entsprechend zurückfedert. Insbesondere bei vergleichsweise massereichen Tankklappen kann das Zurückfedern ein unerwünschter zu vermeidender Effekt sein.

Aus der DE 198 27 194 A1 ist eine Tankklappenanordnung bekannt, bei der der Rand der Tankmulde eine umlaufende Gummidichtung trägt. Diese Gummidichtung kann in der geschlossenen Stellung der Tankklappe als Anschlag dienen. Die Schwenkbewegung der Tankklappe ist nicht gedämpft. Weiterhin ist auch in der geöffneten Stellung kein Anschlag vorgesehen.

Aus der DE 41 25 184 A1 ist eine Handschuhkastenanordnung bekannt, bei der ein Deckel aus einer geschlossenen in eine geöffnete Stellung überführbar ist. Die Handschuhkastenanordnung weist ein aus einem elastischen Material, wie beispielsweise Gummi, bestehendes, teilweise hohles Dämpfungselement auf. Dieses ist derart angeordnet, dass der Deckel bei Erreichen der geöffneten Position gegen das Dämpfungselement anschlägt und dieses deformiert. Dadurch wird eine Anschlagsdämpfung realisiert.

Das der vorliegenden Erfindung zugrundeliegende Problem ist die Schaffung einer Tankklappenanordnung der eingangs genannten Art, die mit effektiveren und/oder kostengünstigeren Dämpfungsmitteln versehen ist. Weiterhin soll ein Verfahren zur Herstellung einer derartigen Tankklappenanordnung angegeben werden.

Dies wird hinsichtlich der Tankklappenanordnung durch eine Tankklappenanordnung der eingangs genannten Art mit den kennzeichnenden Merkmalen des Anspruchs 1 sowie hinsichtlich des Verfahrens durch ein Verfahren der eingangs genannten Art mit den Merkmalen des Anspruchs 10 erreicht.

Anspruch 1 sieht vor, dass die Dämpfungsmittel derart ausgebildet und/oder angeordnet sind, dass sie auch als Anschlagsdämpfung im Bereich der zweiten Position der Schwenkbewegung der Tankklappe dienen, so dass ein Zurückfedern der Tankklappe verhindert werden kann. Die Dämpfungsmittel erfüllen somit eine Doppelfunktion, nämlich zum Einen eine Dämpfung der Schwenkbewegung und zum Anderen die Funktion einer Anschlagsdämpfung. Damit wird gegenüber dem vorgenannten Stand der Technik eine zusätzliche Funktion erfüllt, so dass die Dämpfung effektiver ist. In der zweiten Position, die der geöffneten Position entspricht, kann durch die Anschlagsdämpfung insbesondere ein Zurückfedern der Tankklappe verhindert werden.

Gemäß Anspruch 2 kann vorgesehen sein, dass die Tankklappenanordnung einen Aufnahmetopf umfasst, in dem die Tankmulde ausgebildet ist. Ein derartiger Aufnahmetopf wird in der Regel als Modul in eine entsprechende Öffnung in der Außenhaut des Kraftfahrzeuges eingesetzt.

Gemäß Anspruch 3 kann vorgesehen sein, dass die Dämpfungsmittel auf der der Tankmulde zugewandten Innenseite des Aufnahmetopfes angeordnet sind. Die Dämpfungsmittel können somit in den als Einheit in die Kfz-Außenhaut einsetzbaren Aufnahmetopf integriert sein.

Gemäß Anspruch 4 kann vorgesehen sein, dass die Tankklappenanordnung eine Tankklappeneinheit umfasst, die die Tankklappe und ein mit dieser verbundenen Haltearm aufweist.

Gemäß Anspruch 5 kann vorgesehen sein, dass der Haltearm zumindest abschnittsweise während der Schwenkbewegung der Tankklappe derart anliegend an den Dämpfungsmitteln vorbeigleiten kann, dass die Schwenkbewegung zumindest abschnittsweise gedämpft wird. Das Vorbeigleiten des Haltearms an den Dämpfungsmitteln zur Dämpfung der Schwenkbewegung stellt einen mechanisch ausgesprochen einfachen und daher kostengünstig herstellbaren Funktionszusammenhang dar. Es könnte beispielsweise vorgesehen sein, dass der Haltearm derart ausgebildet ist, dass nur einzelne Abschnitte, insbesondere der letzte Abschnitt der Schwenkbewegung gedämpft wird.

Gemäß Anspruch 6 kann vorgesehen sein, dass im Bereich der zweiten Position der Tankklappe ein an dem Haltearm ausgebildeter Anlageabschnitt derart an die Dämpfungsmittel anschlägt, dass diese als Anschlagsdämpfung dient. Funktional kann somit der Haltearm auch mit den Dämpfungsmitteln zur Realisierung der Anschlagsdämpfung zusammenwirken. Auf diese Weise wird die Anzahl der Teile drastisch reduziert, so dass die Herstellungskosten gesenkt werden können.

Gemäß Anspruch 7 kann vorgesehen sein, dass der Haltearm an seinem einen Ende mit der Tankklappe verbunden ist und an seinem anderen Ende um eine Schwenkachse schwenkbar gelagert ist.

Gemäß Anspruch 8 kann vorgesehen sein, dass die Dämpfungsmittel als Polster aus einem elastischen Material, insbesondere einem weichen Kunststoffmaterial wie EPDMPP ausgebildet sind. Die Ausbildung der Dämpfungsmittel als Poster lässt sich vergleichsweise einfach realisieren und ist somit kostengünstig. Ein weiches Kunststoffmaterial wie EPDMPP weist gute Dämpfungseigenschaften auf.

Gemäß Anspruch 9 kann vorgesehen sein, dass der Aufnahmetopf aus zwei Komponenten, insbesondere aus einem härteren und einem weicheren Kunststoff besteht, wobei vorzugsweise der weichere Kunststoff EPDMPP ist. Derartige Aufnahmetöpfe werden bereits im Stand der Technik hergestellt und in Kraftfahrzeugen eingesetzt. Durch die Wahl des gleichen Kunststoffes für die Dämpfungsmittel und den Aufnahmetopf wird die Verbindbarkeit verbessert beziehungsweise die Herstellung vereinfacht.

Der das Verfahren betreffende Anspruch 10 sieht vor, dass das Dämpfungsmittel an den Aufnahmetopf angespritzt wird. Durch das Anspritzen kann das Polster zum Einen sehr gut mit dem Aufnahmetopf verbunden werden und zum Anderen ist es vergleichsweise einfach und kostengünstig herstellbar.

Gemäß Anspruch 11 kann vorgesehen sein, dass der Aufnahmetopf in einem Zwei-Komponenten-Spritzwerkzeug hergestellt wird, wobei die Dämpfungsmittel während der Herstellung des Aufnahmetopfes mitgespritzt werden. Somit können in einem einzigen Arbeitsgang sowohl der Aufnahmetopf als auch die Dämpfungsmittel hergestellt werden. Auf diese Weise sind keine zusätzlichen Montageschritte erforderlich, so dass die Herstellungskosten gesenkt werden können. Weiterhin können bei dieser Herstellung Fertigungstoleranzen problemlos ausgeglichen werden.

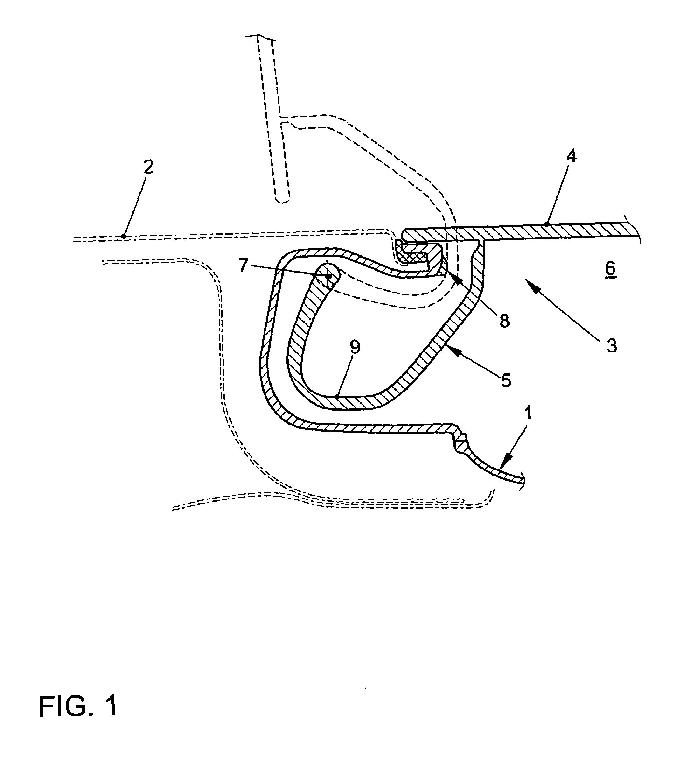

Weitere Merkmale und Vorteile der vorliegenden Erfindung werden deutlich anhand der nachfolgenden Beschreibung bevorzugter Ausführungsbeispiele unter Bezugnahme auf die beiliegende Abbildung. Darin zeigt
- Fig. 1: einen Detailschnitt durch eine erfindungsgemäße Tankklappenanordnung.

Eine erfindungsgemäße Tankklappenanordnung umfasst im Wesentlichen einen Aufnahmetopf 1, der in eine entsprechende Öffnung in der Kraftfahrzeugaußenhaut 2 eingebracht ist, sowie eine Tankklappeneinheit 3, die schwenkbar mit dem Aufnahmetopf 1 verbunden ist. Die Tankklappeneinheit 3 umfasst eine Tankklappe 4 sowie einen mit der Tankklappe 4 verbundenen Haltearm 5.

Der Aufnahmetopf 1 bildet eine Tankmulde 6 aus, in die während eines Betankvorgangs eine Zapfpistole eingebracht werden kann. An der in Fig. 1 unteren Seite des Aufnahmetopfes 1 ist der in der Regel durch einen Schraubverschluss verschlossene Einfüllstutzen des Kraftfahrzeugtanks angeordnet.

Der Haltearm 5 ist im Wesentlichen U-förmig ausgebildet und auf seinem von der Schwenkachse 7 abgewandten Ende mit der Tankklappe 4 verbunden. Die Tankklappeneinheit 3 ist in Fig. 1 in zwei unterschiedlichen Positionen dargestellt, nämlich durchgezeichnet in einer ersten Position, in der die Tankklappe 4 die Tankmulde 6 im Wesentlichen verschließt, sowie gestrichelt in einer zweiten Position, in der die Tankmulde 6 für das Betanken des Kraftfahrzeugs von außen zugänglich ist.

Die erfindungsgemäße Tankklappenanordnung umfasst weiterhin Dämpfungsmittel 8, die an dem Aufnahmetopf 1 angeordnet sind. Wie aus Fig. 1 ersichtlich ist, befinden sich die Dämpfungsmittel 8 auf der dem Haltearm 5 zugewandten Innenseite des Aufnahmetopfes 1 benachbart zu dem außenseitigen Ende des Aufnahmetopfes 1. Die Dämpfungsmittel 8 können als Polster ausgeführt sein, aus einem vergleichsweise weichen Kunststoff wie aus EPDMPP bestehen und an den Aufnahmetopf 1 angespritzt sein.

Es besteht die Möglichkeit, dass der Aufnahmetopf 1 aus zwei Komponenten besteht, nämlich einem härteren und einem weicheren Kunststoff. Dabei kann der weichere Kunststoff insbesondere auch EPDMPP sein. Insbesondere kann das Dämpfungsmittel 8 bei dem Herstellen des Aufnahmetopfes 1 in einem Zwei-Komponenten-Spritzwerkzeug mit an den Aufnahmetopf 1 angespritzt werden.

Aus Fig. 1 ist ersichtlich, dass die Dämpfungsmittel 8 während des Aufschwenkens der Tankklappeneinheit 3 zwei Funktionen erfüllen. Zum Einen kann während des letzten Abschnittes der Aufschwenkbewegung der mittlere als Anlageabschnitt 9 dienende Abschnitt des U-förmigen Haltearms 5 anliegend an den Dämpfungsmitteln 8 derart vorbeigleiten, dass die Schwenkbewegung gedämpft wird. Weiterhin wird in der geöffneten Endstellung der Tankklappeneinheit 3 der Anlageabschnitt 9 des Haltearms 5 derart gegen die Dämpfungsmittel 8 gedrückt, dass diese als Anschlagsdämpfung wirken. Somit wird zum Einen die Aufschwenkbewegung der Tankklappeneinheit 3 gegen Ende gedämpft und zum Anderen wird der Aufprall in der Endstellung durch die Dämpfungsmittel 8 zusätzlich gedämpft, so dass weder ein unangenehmes Geräusch noch ein merkliches Zurückfedern auftritt.

### BEZUGSZEICHENLISTE

- 1: Aufnahmetopf
- 2: KFZ-Aussenhaut
- 3: Tankklappeneinheit
- 4: Tankklappe
- 5: Haltearm
- 6: Tankmulde
- 7: Schwenkachse
- 8: Dämpfungsmittel
- 9: Anlageabschnitt von 5

## Patentansprüche

1. Tankklappenanordnung für ein Kraftfahrzeug, umfassend
- eine Tankmulde (6);
- eine Tankklappe (4), die aus einer ersten Position, in der die Tankklappe (4) die Tankmulde (6) zumindest abschnittsweise verschließt, in mindestens eine zweite Position verschwenkt werden kann, in der die Tankmulde (6) für das Betanken des Kraftfahrzeugs von außen zugänglich ist; sowie
- Dämpfungsmittel (8) für die Dämpfung der Schwenkbewegung der Tankklappe (4);
**dadurch gekennzeichnet, dass** die Dämpfungsmittel (8) derart ausgebildet und/oder angeordnet sind, dass sie auch als Anschlagsdämpfung im Bereich der zweiten Position der Schwenkbewegung der Tankklappe (4) dienen, so dass ein Zurückfedern der Tankklappe (4) verhindert werden kann.

2. Tankklappenanordnung nach Anspruch 1, **dadurch gekennzeichnet, dass** die Tankklappenanordnung einen Aufnahmetopf (1) umfasst, in dem die Tankmulde (6) ausgebildet ist.

3. Tankklappenanordnung nach Anspruch 2, **dadurch gekennzeichnet, dass** die Dämpfungsmittel auf der der Tankmulde (6) zugewandten Innenseite des Aufnahmetopfes (1) angeordnet sind.

4. Tankklappenanordnung nach einem der Ansprüche 1 bis 3, **dadurch gekennzeichnet, dass** die Tankklappenanordnung eine Tankklappeneinheit (3) umfasst, die die Tankklappe (4) und einen mit dieser verbundenen Haltearm (5) aufweist.

5. Tankklappenanordnung nach Anspruch 4, **dadurch gekennzeichnet, dass** der Haltearm (5) zumindest abschnittsweise während der Schwenkbewegung der Tankklappe (4) derart anliegend an den Dämpfungsmitteln (8) vorbeigleiten kann, dass die Schwenkbewegung zumindest abschnittsweise gedämpft wird.

6. Tankklappenanordnung nach einem der Ansprüche 4 oder 5, **dadurch gekennzeichnet, dass** im Bereich der zweiten Position der Tankklappe (4) ein an dem Haltearm (5) ausgebildeter Anlageabschnitt (9) derart an die Dämpfungsmittel (8) anschlägt, dass diese als Anschlagsdämpfung dienen.

7. Tankklappenanordnung nach einem der Ansprüche 4 bis 6, **dadurch gekennzeichnet, dass** der Haltearm (5) an seinem einen Ende mit der Tankklappe (4) verbunden ist und an seinem anderen Ende um eine Schwenkachse (7) schwenkbar gelagert ist.

8. Tankklappenanordnung nach einem der Ansprüche 1 bis 7, **dadurch gekennzeichnet, dass** die Dämpfungsmittel (8) als Polster aus einem elastischen Material, insbesondere einem weichen Kunststoffmaterial wie EPDMPP ausgebildet sind.

9. Tankklappenanordnung nach einem der Ansprüche 2 bis 8, **dadurch gekennzeichnet, dass** der Aufnahmetopf (1) aus zwei Komponenten, insbesondere aus einem härteren und einem weicheren Kunststoff besteht, wobei vorzugsweise der weichere Kunststoff EPDMPP ist.

10. Verfahren zur Herstellung einer Tankklappenanordnung nach einem der Ansprüche 1 bis 9, **dadurch gekennzeichnet, dass** die Dämpfungsmittel (8) an den Aufnahmetopf (1) angespritzt werden.

11. Verfahren nach Anspruch 10, **dadurch gekennzeichnet, dass** der Aufnahmetopf (1) in einem Zwei-Komponenten-Spritzwerkzeug hergestellt wird, wobei die Dämpfungsmittel (8) während der Herstellung des Aufnahmetopfes (1) mitgespritzt werden.

## Claims

1. Fuel-tank flap arrangement for a motor vehicle, comprising
- a fuel-tank trough (6);
- a fuel-tank flap (4) which can be pivoted from a first position, in which the fuel-tank flap (4) closes the fuel-tank trough (6) at least in some sections, into at least one second position, in which the fuel-tank trough (6) is accessible from the outside for the refuelling of the motor vehicle; and
- damping means (8) for damping the pivoting movement of the fuel-tank flap (4);
**characterized in that** the damping means (8) are designed and/or arranged in such a manner that they also serve as striking-action damping in the region of the second position of the pivoting movement of the fuel-tank flap (4) such that the fuel-tank flap (4) can be prevented from springing back.

2. Fuel-tank flap arrangement according to Claim 1, **characterized in that** the fuel-tank flap arrangement comprises a receiving cup (1) in which the fuel-tank trough (6) is formed.

3. Fuel-tank flap arrangement according to Claim 2, **characterized in that** the damping means are arranged on the inside of the receiving cup (1), which side faces the fuel-tank trough (6).

4. Fuel-tank flap arrangement according to one of Claims 1 to 3, **characterized in that** the fuel-tank flap arrangement comprises a fuel-tank flap unit (3) which has the fuel-tank flap (4) and a retaining arm (5) connected thereto.

5. Fuel-tank flap arrangement according to Claim 4, **characterized in that**, during the pivoting movement of the fuel-tank flap (4), the retaining arm (5) can slide at least in some sections past and bearing against the damping means (8) in such a manner that the pivoting movement is damped at least in some sections.

6. Fuel-tank flap arrangement according to either of Claims 4 and 5, **characterized in that**, in the region of the second position of the fuel-tank flap (4), a bearing section (9) formed on the retaining arm (5) strikes against the damping means (8) in such a manner that the latter serve as striking-action damping.

7. Fuel-tank flap arrangement according to one of Claims 4 to 6, **characterized in that** the retaining arm (5) at its one end is connected to the fuel-tank flap (4) and at its other end is mounted pivotably about a pivot axis (7).

8. Fuel-tank flap arrangement according to one of Claims 1 to 7, **characterized in that** the damping means (8) are designed as pads made of an elastic material, in particular a soft plastics material, such as EPDM/PP.

9. Fuel-tank flap arrangement according to one of Claims 2 to 8, **characterized in that** the receiving cup (1) is composed of two components, in particular of a harder and a softer plastic, with the softer plastic preferably being EPDM/PP.

10. Method for producing a fuel-tank flap arrangement according to one of Claims 1 to 9, **characterized in that** the damping means (8) are sprayed onto the receiving cup (1).

11. Method according to Claim 10, **characterized in that** the receiving cup (1) is produced in a two-component injection-moulding die, with the damping means (8) being sprayed on during production of the receiving cup (1).

## Revendications

1. Agencement de volet d'occultation du réservoir d'un véhicule automobile, comprenant :
- un volume de réservoir (6) ;
- un volet d'occultation de réservoir (4), qui peut être pivoté d'une première position, dans laquelle le volet d'occultation de réservoir (4) ferme au moins partiellement le volume de réservoir (6), dans au moins une deuxième position, dans laquelle le volume de réservoir (6) est accessible depuis l'extérieur pour faire le plein de carburant du véhicule automobile ; ainsi que
- des moyens d'amortissement (8) pour l'amortissement du mouvement de pivotement du volet d'occultation de réservoir (4) ;
**caractérisé en ce que** les moyens d'amortissement (8) sont réalisés et/ou disposés de telle sorte qu'ils servent également à amortir la butée dans la région de la deuxième position du mouvement de pivotement du volet d'occultation de réservoir (4), de sorte qu'un rebondissement du volet d'occultation de réservoir (4) puisse être évité.

2. Agencement de volet d'occultation de réservoir selon la revendication 1, **caractérisé en ce que** l'agencement de volet d'occultation de réservoir comprend un pot de réception (1) dans lequel est réalisé le volume de réservoir (6).

3. Agencement de volet d'occultation de réservoir selon la revendication 2, **caractérisé en ce que** les moyens d'amortissement sont disposés sur le côté intérieur du pot de réception (1) tourné vers le volume de réservoir (6).

4. Agencement de volet d'occultation de réservoir selon l'une quelconque des revendications 1 à 3, **caractérisé en ce que** l'agencement de volet d'occultation de réservoir comprend une unité de volet d'occultation de réservoir (3) qui présente le volet d'occultation de réservoir (4) et un bras de retenue (5) connecté à celui-ci.

5. Agencement de volet d'occultation de réservoir selon la revendication 4, **caractérisé en ce que** le bras de retenue (5) peut glisser au moins en partie pendant le mouvement de pivotement du volet d'occultation de réservoir (4) en appui contre les moyens d'amortissement (8) de telle sorte que le mouvement de pivotement soit au moins partiellement amorti.

6. Agencement de volet d'occultation de réservoir selon l'une quelconque des revendications 4 ou 5, **caractérisé en ce que** dans la région de la deuxième position du volet d'occultation de réservoir (4), une portion d'appui (9) réalisée sur le bras de retenue (5) vient buter contre les moyens d'amortissement (8) de telle sorte que ceux-ci servent d'amortissement de butée.

7. Agencement de volet d'occultation de réservoir selon l'une quelconque des revendications 4 à 6, **caractérisé en ce que** le bras de retenue (5) est connecté à l'une de ses extrémités au volet d'occultation de réservoir (4) et est monté à son autre extrémité de manière à pouvoir pivoter autour d'un axe de pivotement (7).

8. Agencement de volet d'occultation de réservoir selon l'une quelconque des revendications 1 à 7, **caractérisé en ce que** les moyens d'amortissement (8) sont réalisés sous forme de coussins en matériau élastique, notamment un matériau en plastique mou comme du EPDMPP.

9. Agencement de volet d'occultation de réservoir selon l'une quelconque des revendications 2 à 8, **caractérisé en ce que** le pot de réception (1) se compose de deux composants, notamment d'un plastique plus dur et d'un plastique plus mou, le plastique plus mou étant de préférence du EPDMPP.

10. Procédé de fabrication d'un agencement de volet d'occultation de réservoir selon l'une quelconque des revendications 1 à 9, **caractérisé en ce que** les moyens d'amortissement (8) sont moulés par injection sur le pot de réception (1).

11. Procédé selon la revendication 10, **caractérisé en ce que** le pot de réception (1) est fabriqué dans un outil de moulage par injection à deux composants, les moyens d'amortissement (8) étant moulés par injection en même temps pendant la fabrication du pot de réception (1).
